# EUROPÄISCHE PATENTANMELDUNG

(11) **EP 4 692 532 A1**
(43) Veröffentlichungstag der Anmeldung: **11.02.2026**
(21) Anmeldenummer: 25193986.4
(22) Anmeldetag: 05.08.2025
(51) Int. Cl.: F02K 9/08, B64G 1/00, B64G 1/40, B64G 1/62, F02K 9/18, F02K 9/34, F02K 9/38

(54) **MOTOR ZUM AUFBRINGEN EINER GESCHWINDIGKEITSÄNDERUNG AUF EINEN FLUGKÖRPER IM WELTRAUM, SOWIE FLUGKÖRPER**

(30) Priorität: 06.08.2024 DE 102024122395
(71) Anmelder: Bayern-Chemie Gesellschaft für flugchemische Antriebe mbH, 84544 Aschau am Inn (DE)
(72) Erfinder: HOLLER, Marcel, 84544 Aschau am Inn (DE); MUßBACH, Günther, 84544 Aschau am Inn (DE); WEIGAND, Alexander, 84544 Aschau am Inn (DE); RINGEISEN, Axel, 84544 Aschau am Inn (DE)
(74) Vertreter: Isarpatent

(57) **Zusammenfassung**

Die vorliegende Erfindung betrifft einen Motor (2) zum Aufbringen einer Geschwindigkeitsänderung, nach Betrag und/oder Richtung, auf einen Flugkörper (1) im Weltraum, insbesondere zum Deorbiten des Flugkörpers, wobei der Motor als ein Feststoffraketenmotor mit einem festen Treibstoff (24) ausgebildet ist und der Motor derart ausgebildet und eingerichtet ist, dass eine Einsatzfähigkeit des Motors unter für die Mission des Flugkörpers vordefinierten Weltraumbedingungen mindestens bis zum Ende eines vordefinierten Einsatzzeitraums (100) des Flugkörpers oder mindestens während eines vordefinierten, erheblichen Teils (204) einer Missionsdauer (200) des Flugkörpers erhalten bleibt. Ferner bezieht sich die Erfindung auf einen Flugkörper für den Einsatz im Weltraum, aufweisend einen derartigen Motor.

## Beschreibung

### TECHNISCHES GEBIET DER ERFINDUNG

Die vorliegende Erfindung betrifft einen Motor zum Aufbringen einer Geschwindigkeitsänderung, nach Betrag und/oder Richtung, auf einen Flugkörper im Weltraum, insbesondere zum Deorbiten des Flugkörpers. Ferner bezieht sich die Erfindung auf einen Flugkörper für den Einsatz im Weltraum, aufweisend einen derartigen Motor.

### HINTERGRUND DER ERFINDUNG

Weltraumschrott im Sinne funktionslos gewordener oder beschädigter Raumflugkörper oder Trägersysteme sowie von Teilen und Fragmenten dieser ist in hohem Maße unerwünscht. Derartiger Weltraumschrott bewegt sich mit hoher Geschwindigkeit und kann funktionsfähige Flugkörper wie Satelliten usw. erheblich beschädigen. Um die Entstehung und Vermehrung von Weltraumschrott zu begrenzen, ist es wünschenswert, beispielsweise Flugkörper wie Satelliten nach Ende ihrer nützlichen Missionsdauer zügig aus ihrer Erdumlaufbahn zu entfernen und hierbei in der Erdatmosphäre beim Absturz möglichst weitgehend verglühen zu lassen.

In der DE 10 2019 115 463 A1 wird ein Verfahren zum Deorbiting eines orbitalen Objekts (Raumfahrzeugs) beschrieben. Das orbitale Objekt wird hierbei mittels eines Deorbiting-Motors abgebremst, wobei eine Schubvektorabweichung zwischen einem Schubvektor und der Längsachse des Deorbiting-Motors reduziert wird. In der DE 10 2019 115 463 A1 wird die Verwendung eines Feststoffantriebs als Deorbiting-Motor vorgeschlagen.

Eine Außerbetriebnahmevorrichtung auf der Basis eines Feststoffraketenantriebs wurde ferner durch A. Fanfani, S. Brilli, M. Trotti, A. Dainotto, E. Toson, A. Weigand und F. Nichele in dem Beitrag "Launch of a 3 Unit Cubesat with integrated propulsion system: D-SAT qualification, acceptance and transportation logistics", 67th International Astronautical Congress (IAC), Guadalajara, Mexico, 26.-30. September 2016, beschrieben.

Ferner sind Anforderungen im Hinblick auf die Vermeidung von Weltraummüll oder -schrott beispielsweise in der Norm ISO 24113 *"Space systems - space debris mitigation requirements"* definiert.

### ZUSAMMENFASSUNG DER ERFINDUNG

Vor diesem Hintergrund liegt der Erfindung die Aufgabe zu Grunde, auf sichere, zuverlässige und möglichst einfache Weise ein Deorbiting eines Flugkörpers mittels Feststoffantrieb sicherzustellen.

Diese Aufgabe wird durch einen Motor mit den Merkmalen des Patentanspruchs 1 und/oder einen Flugkörper mit den Merkmalen des Patentanspruchs 14 gelöst.

Demgemäß wird ein Motor zum Aufbringen einer Geschwindigkeitsänderung, nach Betrag und/oder Richtung, auf einen Flugkörper im Weltraum, insbesondere zum Deorbiten des Flugkörpers, vorgeschlagen, wobei der Motor als ein Feststoffraketenmotor mit einem festen Treibstoff ausgebildet ist. Der Motor ist hierbei derart ausgebildet und eingerichtet, dass eine Einsatzfähigkeit des Motors unter für die Mission des Flugkörpers vordefinierten Weltraumbedingungen mindestens bis zum Ende eines vordefinierten Einsatzzeitraums des Flugkörpers oder mindestens während eines vordefinierten, erheblichen Teils einer Missionsdauer des Flugkörpers erhalten bleibt.

Erfindungsgemäß wird ferner ein Flugkörper für den Einsatz im Weltraum, aufweisend einen derartigen Motor, vorgeschlagen.

Vorteilhaft kann der erfindungsgemäße Motor zum Deorbiting des im Weltraum befindlichen, insbesondere sich auf einer Umlaufbahn um einen Himmelskörper wie die Erde bewegenden, Flugkörpers durch Aufbringen der Geschwindigkeitsänderung auf diesen eingesetzt werden.

Im Vergleich mit anderen chemischen Systemen, die benutzt werden können, um eine Geschwindigkeitsänderung nach Betrag und/oder Richtung auf einen Flugkörper im Weltraum aufzubringen, etwa Flüssigkeitsantrieben mit Hydrazin als Treibstoff, sind Feststoffraketenmotoren, zum Beispiel bei der Herstellung, Montage und Startvorbereitung des Flugkörpers, robuster, sicherer, umweltfreundlicher und einfacher zu handhaben. Beispielsweise entfällt die schwierigere Handhabung flüssiger, oftmals toxischer und explosiver Treibstoffe.

Zudem bieten Feststoffraketenmotoren einen relativ einfachen Aufbau. Die Lagerung eines flüssigen Treibstoffs in Tanks, sowie entsprechende Leitungen und Ventile, entfallen somit.

Die relative einfache Bauweise und sichere Handhabung der Feststoffraketenmotoren, sowie die Möglichkeit zweckmäßiger Lagerung unter den auf der Erdoberfläche herrschenden Umgebungsbedingungen, können Kostenersparnisse ermöglichen.

Der Feststoffraketenmotor ermöglicht die Aufbringung eines relativ kurzzeitigen, hohen Schubs und benötigt ferner im Vergleich mit anderen Systemen zur Geschwindigkeitsänderung vorteilhaft bei gegebenem Gewicht relativ wenig Bauvolumen, was im Aufbau des Flugkörpers von Vorteil sein kann.

Ferner haben Festtreibstoffe insbesondere den weiteren Vorteil, dass ein Schwappen einer Flüssigkeit (so genanntes "sloshing"), welches beispielsweise im Hinblick auf die Lageregelung eines Satelliten von Bedeutung sein kann, vermieden wird. Eine Instabilität des Flugkörpers durch "sloshing" wird somit ebenfalls vermieden.

Feststoffraketenmotoren sind ferner geeignet, einen Schubvektor mit geringer Richtungsabweichung vom Soll bereitzustellen und können gut an die Anforderungen unterschiedlicher Flugkörper angepasst werden.

Der erfindungsgemäß vorgesehene Motor kann über den Einsatzzeitraum bzw. die Missionsdauer des Flugkörpers hinweg, der/die oftmals Jahre oder Jahrzehnte beträgt, unter den für die Mission definierten Bedingungen im Weltraum verbleiben, oder zumindest über einen erheblichen Teil dieser Missionsdauer. Hierbei nimmt der Motor unter den Weltraumbedingungen aufgrund seiner Qualifikation keinen Schaden oder wird nur unwesentlich beeinflusst, so dass der Motor insbesondere am Ende der Mission oder zu einem Zeitpunkt nach Ablauf eines erheblichen Teils der Missionsdauer, etwa zum Deorbitieren, zuverlässig und problemlos funktioniert.

Ferner können mit Feststoffraketenmotoren hohe Schübe erreicht werden, mittels derer sich harte Bremsmanöver realisieren lassen. Dies kann beispielsweise vorteilhaft sein, wenn ein Satellit hoher Masse aus dem Orbit entfernt werden soll. In einem derartigen Fall kann es sein, dass der Flugkörper nicht vollständig in der Erdatmosphäre verglüht. In diesen Fällen wird ein steiler Wiedereintritt durch ein hartes Bremsmanöver angestrebt, um den Ort, an dem eventuell verbleibende Fragmente auf die Erdoberfläche auftreffen könnten, gut vorhersagen und beeinflussen zu können, damit die Fragmente möglichst in unbewohntem Gebiet niedergehen. Zudem kann sich ein hartes Bremsmanöver als vorteilhaft erweisen, wenn ein funktionsloser Satellit möglichst rasch aus seiner Bahn entfernt werden soll, um dort einen anderen, funktionsfähigen Flugkörper platzieren zu können.

Vorteilhafte Ausgestaltungen und Weiterbildungen der Erfindung ergeben sich aus den weiteren Unteransprüchen sowie aus der Beschreibung unter Bezugnahme auf die Figuren.

In einer Ausgestaltung ist der Motor gegenüber einem unter den vordefinierten Weltraumbedingungen erwartbaren Umgebungsdruck in der Weise dicht ausgebildet, dass eine vor Missionsbeginn in einen Innenraum des Motors, der den festen Treibstoff enthält, eingebrachte Gasfüllung, insbesondere eine mit Stickstoff oder einem Edelgas gebildete Gasfüllung, während des Einsatzzeitraums oder erheblichen Teils der Missionsdauer des Flugkörpers im Wesentlichen erhalten bleibt und/oder ein Gasdruck der Gasfüllung in dem Innenraum am Ende des Einsatzzeitraums oder des erheblichen Teils der Missionsdauer größer als ein oder gleich einem Gasdruck-Mindestwert ist, der ermöglicht, dass der Motor gezündet werden kann und ein vordefiniertes Soll-Abbrandverhalten aufweist und/oder der Gasdruck in dem Innenraum am Ende des Einsatzzeitraums oder des erheblichen Teils der Missionsdauer unter den vordefinierten Weltraumbedingungen, insbesondere den operativen Bedingungen des Flugkörpers im Weltraum, mindestens 100 Millibar beträgt. Auf diese Weise kann wirkungsvoll verhindert werden, dass der feste Treibstoff, der nicht notwendig und insbesondere über längere Zeiträume unter Bedingungen, die einem Vakuum entsprechen oder diesem nahekommen, stabil ist, dem Vakuum ausgesetzt wird und sich nachteilig verändert, etwa durch Ausgasen oder ähnliche Vorgänge. Die Gasfüllung kann hierbei beispielsweise mit Stickstoff oder mit Helium gebildet sein. Der Gasdruck-Mindestwert kann somit in bevorzugten Ausgestaltungen im Wesentlichen, wie vorstehend genannt, 100 mbar betragen, jedoch in anderen Ausgestaltungen anders gewählt sein. Insbesondere kann der Gasdruck-Mindestwert in Abhängigkeit vom Typ des festen Treibstoffs gewählt sein. Der vorstehend genannte Gasdruck-Mindestwert, beispielhaft von 100 mbar, versteht sich bei den vordefinierten Weltraumbedingungen, insbesondere den operativen Bedingungen des Flugkörpers im Weltraum, zum Beispiel im Orbit, und versteht sich zudem als Absolutdruck, mithin gegenüber dem Vakuum.

Bevorzugt weist der Motor eine Düse auf, mittels der Reaktionsprodukte beim Abbrand des Treibstoffs beschleunigt und expandiert werden können. Auf diese Weise gelingt eine effiziente Geschwindigkeitsänderung unter guter Ausnutzung der Startmasse des Motors.

In einer Weiterbildung sind Komponenten eines Gehäuses des Motors miteinander und/oder mit einer Düse, mittels der Reaktionsprodukte beim Abbrand des Treibstoffs beschleunigt und expandiert werden, oder mit einem Düsenteil, unter dem Umgebungsdruck, der unter den vordefinierten Weltraumbedingungen erwartbar ist, dicht verbunden, insbesondere verschweißt. Der Umgebungsdruck kann nahe dem Vakuum sein oder einem Vakuum entsprechen. Auf diese Weise kann wiederum die Dichtigkeit des Motors gegenüber dem Vakuum oder vakuumnahen Bedingungen sichergestellt werden, so dass ein Entweichen der schützenden Gasfüllung und eine Beeinträchtigung des festen Treibstoffs vermieden oder ein solches Entweichen der Gasfüllung zumindest in hinreichender Weise verlangsamt wird. Ein Verschweißen kann bevorzugt sein, um eine besonders dichte Verbindung zu erzielen. Alternativ ist die Verwendung geeigneter elastischer Dichtelemente, etwa ringartiger Dichtelemente wie O-Ringe, vorstellbar.

Gemäß einer Ausgestaltung ist der Motor derart ausgebildet, dass durch den Betrieb des Motors im Wesentlichen keine Partikel, Stücke oder Fragmente freigesetzt werden, deren Größe und/oder Volumen jeweils einen vorbestimmten Maximalwert übersteigt. Auf diese Weise kann vermieden werden, dass der Betrieb des Motors zum "Weltraummüll" durch Abgabe derartiger Partikel, Stücke oder Fragmente beiträgt.

In einer Weiterbildung ist eine durch Inbetriebnahme des Motors zerstörbare, insbesondere folien- oder membranartige, Versiegelung des Motors im Bereich einer Düse, eines Düsenzulaufs oder eines Austrittsendes einer Brennkammer derart ausgebildet, dass durch das Zerstören der Versiegelung bei der Inbetriebnahme des Motors im Wesentlichen keine Fragmente oder keine Fragmente mit einer Größe und/oder einem Volumen oberhalb eines vordefinierten Maximalwerts, insbesondere jeweils einer Größe von mehr als 1 mm und/oder einem Volumen von mehr als 1 mm³, freigesetzt werden.

Bei einer Ausgestaltung ist der feste Treibstoff derart ausgebildet, dass durch den Abbrand des Treibstoffs, insbesondere durch Agglomeration von Treibstoffbestandteilen und/oder Reaktionsprodukten, im Wesentlichen keine Partikel oder keine Partikel mit einer Größe und/oder einem Volumen oberhalb eines vordefinierten Maximalwerts, insbesondere jeweils einer Größe von mehr als 1 mm und/oder einem Volumen von mehr als 1 mm³, freigesetzt werden.

In einer Weiterbildung ist der Motor derart ausgebildet, dass beim Betrieb des Motors durch Materialabtrag im Bereich einer Düse und/oder eines einen Zulauf zur Düse bildenden Brennkammerabschnitts und/oder durch Abbrand oder Abtrag einer Isolationsschicht zwischen dem festen Treibstoff und einer Brennkammerwand im Wesentlichen keine Partikel oder Fragmente oder keine Partikel oder Fragmente mit einer Größe und/oder einem Volumen oberhalb eines vordefinierten Maximalwerts, insbesondere jeweils einer Größe von mehr als 1 mm und/oder einem Volumen von mehr als 1 mm³, freigesetzt werden.

In einer Ausgestaltung weist der Motor eine Anzündeinrichtung für den festen Treibstoff auf, welche derart ausgebildet ist, dass durch Auslösen und Betrieb der Anzündeinrichtung im Wesentlichen keine Partikel oder Fragmente oder keine Partikel oder Fragmente mit einer Größe und/oder einem Volumen oberhalb eines vordefinierten Maximalwerts, insbesondere jeweils einer Größe von mehr als 1 mm und/oder einem Volumen von mehr als 1 mm³, freigesetzt werden.

Mit den vorstehend beschriebenen Ausgestaltungen und Weiterbildungen, welche die Freisetzung von Partikeln, Stücken und/oder Fragmenten oberhalb einer vordefinierten Maximalgröße verhindern, wird ein Beitrag zum "Weltraummüll" durch den Betrieb des Motors vermieden oder zumindest weitgehend vermieden.

Gemäß einer Ausgestaltung ist der feste Treibstoff derart ausgebildet und in dem Motor untergebracht, dass der feste Treibstoff unter einer bei den vordefinierten Weltraumbedingungen erwartbaren zyklischen Temperaturänderung und resultierender Thermalbelastung des Treibstoffs während des vordefinierten Einsatzzeitraums des Flugkörpers oder des erheblichen Teils der Missionsdauer durch wiederholtes Ausdehnen und Zusammenziehen im Wesentlichen nicht mechanisch versagt. Unter Weltraumbedingungen, im Vakuum oder nahe Vakuum, können insbesondere durch Sonneneinstrahlung auf eine Seite des Flugkörpers, während eine andere Seite dem kalten Raum zugewandt im Schatten liegt, erhebliche Temperaturgradienten entstehen. Diese Ausgestaltung in Bezug auf den festen Treibstoff verhindert, dass durch mechanisches Versagen des Treibstoffs wie Brüche, Rissbildungen und dergleichen ein kontrollierter, definierter Abbrand und eine vorhersehbare Schuberzeugung beeinträchtigt werden.

Bei einer Ausgestaltung ist der feste Treibstoff gegenüber einer unter den vordefinierten Weltraumbedingungen auf den Treibstoff einwirkenden Weltraumstrahlung, insbesondere hochenergetischer Teilchenstrahlung und/oder elektromagnetischer Strahlung, resistent ausgebildet. Dies verbessert die Fähigkeit des Motors, unter Weltraumbedingungen über lange Zeit, insbesondere über Jahre, bis zum Verwendungszeitpunkt des Motors gelagert zu werden, weiter.

In einer Ausgestaltung ist vorgesehen, dass während des vordefinierten Einsatzzeitraums und/oder des erheblichen Teils der Missionsdauer unter den vordefinierten Weltraumbedingungen auf den Treibstoff einwirkende Weltraumstrahlung eine Fähigkeit des Treibstoffs für einen bestimmungsgemäßen Abbrand im Betrieb und eine Widerstandsfähigkeit des Treibstoffs gegen unkontrollierte Reaktion desselben nicht wesentlich beeinträchtigt und insbesondere dass die unter den vordefinierten Weltraumbedingungen auf den Treibstoff einwirkende Weltraumstrahlung eine Abbrandgeschwindigkeit und/oder einen spezifischen Impuls nicht wesentlich beeinträchtigt.

Gemäß einer Weiterbildung ist eine Änderung mechanischer Eigenschaften des festen Treibstoffs, insbesondere einer Elastizität oder Dehnbarkeit, während des vordefinierten Einsatzzeitraums des Flugkörpers oder des erheblichen Teils der Missionsdauer, insbesondere aufgrund einer Einwirkung von unter den vordefinierten Weltraumbedingungen auf den Treibstoff einwirkender Strahlung, in der Weise begrenzt, dass während der im vordefinierten Einsatzzeitraum des Flugkörpers oder erheblichen Teil der Missionsdauer erwarteten Thermalzyklen kein mechanisches Versagen des Treibstoffs auftritt. Somit kommt es insbesondere in diesem Zeitraum oder erheblichen Teil der Missionsdauer nicht zu wesentlicher Rißbildung im festen Treibstoff unter wiederholter Temperaturänderung, und somit wird ein kontrollierter Abbrand zum Verwendungszeitpunkt des Motors nicht beeinträchtigt.

Die Weltraumstrahlung, dergegenüber gemäß den vorstehenden Ausgestaltungen der feste Treibstoff resistent ist oder durch die während des vordefinierten Einsatzzeitraums und/oder Teils der Missionsdauer der feste Treibstoff in dessen Fähigkeit für bestimmungsgemäßen Abbrand, in dessen Widerstandsfähigkeit gegen unkontrollierte Reaktion, insbesondere in dessen Abbrandgeschwindigkeit und/oder spezifischem Impuls und/oder mechanischen Eigenschaften, nicht wesentlich beeinträchtigt wird, kann Weltraumstrahlung oder kosmische Strahlung sein, die mit Blick auf die eintreffenden Teilchenenergien, etwa die Energien von eintreffenden Protonen, Elektronen, Alphateilchen oder ggf. schwereren Kernen, und/oder die Anteile eintreffender hochenergetischer elektromagnetischer Strahlung, entsprechend dem Orbit des Flugkörpers oder dessen Flugbahn spezifiziert ist.

In einer Ausgestaltung ist der feste Treibstoff unempfindlich gegen den Einschlag von Mikrometeoriten und/oder mikrometeoritenähnlichen Teilchen ausgebildet und/oder gegen den Einschlag von Mikrometeoriten und/oder mikrometeoritenähnlichen Teilchen geschützt untergebracht. Ein mikrometeoritenähnliches Teilchen kann ein dem Weltraummüll zuzurechnendes Teilchen sein, dessen Entstehung auf menschliche Raumfahrtaktivität zurückgeht. Hierbei ist der feste Treibstoff insbesondere derart ausgebildet, dass ein Einschlag eines Mikrometeoriten und/oder mikrometeoritenähnlichen Teilchens mit vordefinierter Masse und Geschwindigkeit weder Abbrand noch Detonation des Treibstoffs auslöst.

Gemäß einer Weiterbildung weist der Motor ein abschirmendes Element, insbesondere eine Gehäuse- oder Brennkammerkomponente oder einen zusätzlichen Schild, auf, das dafür eingerichtet ist, eine Einwirkung von Weltraumstrahlung und/oder Mikrometeoriten und/oder mikrometeoritenähnlichen Teilchen auf den festen Treibstoff wenigstens zu vermindern. Beispielsweise kann das abschirmende Element dafür ausgebildet sein, die Amplitude der eintreffenden Weltraumstrahlung und/oder die kinetische Energie der Mikrometeoriten oder mikrometeoritenähnlichen Teilchen auf ein tolerierbares Maß zu vermindern. Somit wird ermöglicht, den Motor vor Beschädigung durch kosmische Strahlung und Mikrometeoriten zu schützen und zu vermeiden, dass es zu nachteiligen Veränderungen kommt und/oder ein Einschlag eines Mikrometeoriten oder mikrometeoritenähnlichen Teilchens zur Abbrandreaktion führt.

Das abschirmende Element kann in einer Ausgestaltung zum Beispiel mit einem Material mit einem hohen Absorptionsvermögen für Weltraumstrahlung ausgebildet sein.

In einer anderen Ausgestaltung kann das abschirmende Element als ein Reflektor ausgebildet sein, um kosmische Strahlung oder Weltraumstrahlung wenigstens anteilsweise zu reflektieren oder abzulenken.

Das abschirmende Element kann in einer Weiterbildung aus mehreren Schichten unterschiedlicher Werkstoffe zusammengesetzt sein. Dies kann helfen, die abschirmende Wirkung noch zu verbessern.

Zur Aufnahme und/oder Ableitung der beim Einschlag von Mikrometeoriten oder mikrometeoritenähnlichen Teilchen eingetragenen Energie kann in einer Ausgestaltung das abschirmende Element, insbesondere der zusätzliche Schild, als ein Wabenkörper ausgebildet sein. Laminatförmige Werkstoffe beispielsweise können die kinetische Energie des Mikrometeoriten beim Aufprall desselben absorbieren.

Mikrometeoriten oder mikrometeoritenähnliche Teilchen, gegenüber deren Einschlag der feste Treibstoff gemäß vorstehend genannten Ausgestaltungen und Weiterbildungen unempfindlich ausgebildet und/oder geschützt untergebracht sein kann, haben beispielsweise bezüglich des Motors eine Relativgeschwindigkeit beim Einschlag von zwischen 10 km/s und 20 km/s.

In einer Ausgestaltung kann der Motor mit einer Schubvektorsteuerung versehen sein. Dies kann dazu beitragen, den Schubvektor noch genauer einstellen und bei Bedarf ggf. verändern zu können.

In einer weiteren Ausgestaltung kann der Motor derart ausgebildet sein, dass eine Schubvektorabweichung relativ zu einem vordefinierten Soll-Schubvektor zum Einsatzzeitpunkt des Motors, insbesondere nach einer Lagerung des Motors unter den Weltraumbedingungen während des vordefinierten Einsatzzeitraums und/oder erheblichen Teils der Missionsdauer, minimiert wird.

Der Motor kann insbesondere derart ausgebildet und eingerichtet sein, dass eine Einsatzfähigkeit des Motors unter den vordefinierten Weltraumbedingungen während eines Zeitraums von mindestens fünf Erdjahren, bevorzugt von mindestens zehn Erdjahren, weiter bevorzugt von mindestens fünfzehn Erdjahren, noch weiter bevorzugt von mindestens zwanzig Erdjahren, erhalten bleibt.

Gemäß einer Weiterbildung kann der Flugkörper dafür ausgebildet sein, sich während seines Einsatzzeitraums im Weltraum auf einer Umlaufbahn um ein Gravitationszentrum, insbesondere auf einer Erdumlaufbahn, zu bewegen.

In einer Ausgestaltung ist der Flugkörper für einen Einsatzzeitraum von mindestens fünf Erdjahren oder von mindestens zehn Erdjahren oder von mindestens fünfzehn Erdjahren oder von mindestens zwanzig Erdjahren ausgebildet.

In einer anderen Ausgestaltung kann der Flugkörper dafür ausgebildet sein, während des erheblichen Teils seiner Missionsdauer einen Flug zu einem anderen Himmelskörper, beispielsweise einen interplanetaren Flug, auszuführen. Der Flugkörper kann hierbei beispielsweise eine Sonde sein.

Der Flugkörper kann beispielsweise für eine Missionsdauer ausgebildet sein, deren erheblicher Teil mindestens fünf Erdjahre oder mindestens zehn Erdjahre oder mindestens fünfzehn Erdjahre oder mindestens zwanzig Erdjahre beträgt.

Insbesondere kann der Flugkörper ein künstlicher Raumflugkörper sein, der sich oberhalb der regulären Flughöhe von Flugzeugen bezüglich der Erdoberfläche im Weltraum bewegt.

In einer Ausgestaltung ist der Flugkörper als ein Satellit oder als eine Raumstation oder ein Teil einer solchen oder als eine Raumsonde oder als eine Trägerrakete oder ein Teil einer solchen ausgebildet. Eine Anwendung der Erfindung auf andere Flugkörper für den Einsatz im Weltraum ist denkbar.

Der Motor kann bereits beim Start des Flugkörpers von der Erdoberfläche in diesen integriert oder mit diesem verbunden sein. Hierbei ist der Motor vom Beginn der Mission des Flugkörpers an mit dem Flugkörper verbunden oder ein Bestandteil desselben.

Alternativ kann vorgesehen sein, dass der Motor vom Flugkörper getrennt in den Weltraum verbracht wird. Der Motor kann dann je nach Bedarf zum Beispiel mittels eines Raumschleppers ("space tug") an dem Flugkörper angebracht werden. Auch in diesem Fall kann vorgesehen sein, dass der Motor über einen längeren Zeitraum im Weltraum aufbewahrt und erst bei Bedarf an dem Flugkörper angebracht wird.

### KURZBESCHREIBUNG DER ZEICHNUNGEN

Im Folgenden wird die Erfindung unter Bezugnahme auf die schematischen Figuren der Zeichnung erläutert. Von den Figuren zeigen:
- Fig. 1: einen beispielhaft als Satellit ausgebildeten Flugkörper, der mit einem Motor gemäß einem Ausführungsbeispiel der Erfindung ausgestattet ist;
- Fig. 2: einen Motor gemäß einem Ausführungsbeispiel der Erfindung, schematisch, in einem Längsschnitt;
- Fig. 3: eine Skizze (a) zur Illustration eines Einsatzzeitraums des Flugkörpers sowie eine Skizze (b) zur Illustration einer Missionsdauer des Flugkörpers und eines beispielhaften erheblichen Teils dieser; und
- Fig. 4: ausschnittsweise in einem Längsschnitt eine Variante des Motors der Fig. 2.

In den Figuren bezeichnen dieselben Bezugszeichen gleiche oder funktionsgleiche Komponenten, soweit nichts Gegenteiliges angegeben ist.

### AUSFÜHRLICHE BESCHREIBUNG VON AUSFÜHRUNGSBEISPIELEN DER ERFINDUNG

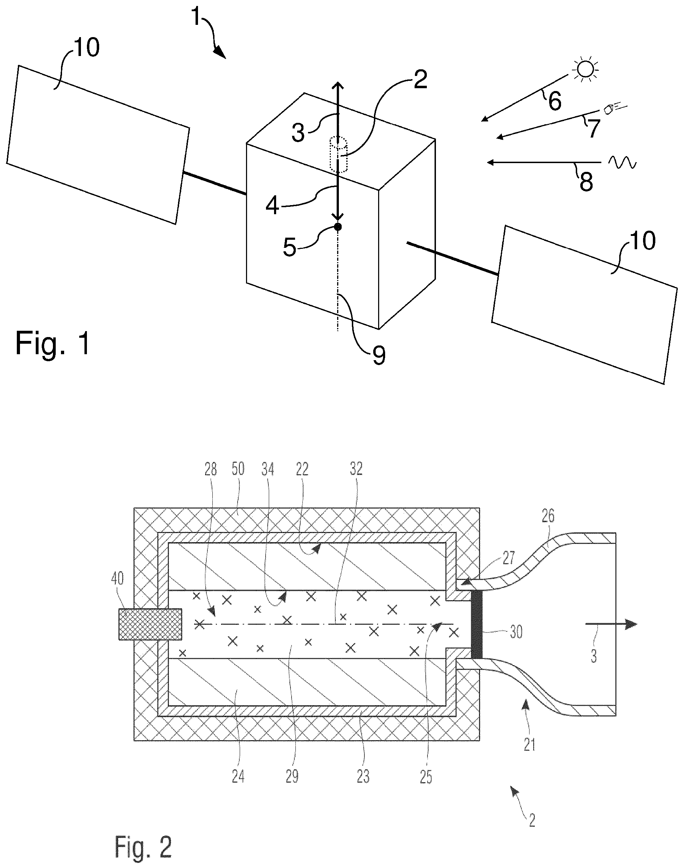

Fig. 1 zeigt einen beispielhaften Flugkörper 1. Der Flugkörper 1 kann als ein Satellit ausgebildet sein, oder alternativ zum Beispiel als eine Sonde oder eine Raumstation oder Teil einer solchen. Die in Fig. 1 gezeigte Formgebung des Flugkörpers 1 und dessen Ausstattung mit paneelartigen Photovoltaikeinrichtungen 10 sind somit schematisch und beispielhaft zu verstehen. Der Flugkörper 1 kann zum Beispiel wissenschaftliche, kommerzielle oder militärische Zwecke erfüllen.

Der Flugkörper 1 ist dafür vorgesehen, sich im Weltraum entlang einer Flugbahn zu bewegen. Insbesondere kann sich der Flugkörper 1, zum Beispiel als Satellit oder Raumstation oder deren Teil, um einen Himmelskörper, vorzugsweise die Erde, auf einer elliptischen oder kreisförmigen Umlaufbahn ("Orbit") bewegen. Insbesondere kann der Flugkörper 1 auf einer erdnahen Umlaufbahn (sog. "low earth orbit", LEO) zum Einsatz kommen. Andere Flugkörper, etwa Satelliten, für höhere Orbits, oder Flugkörper 1 für den Einsatz im Weltraum, die einer andersgearteten Bahn, zum Beispiel einer Kreis- oder Ellipsenbahn um einen anderen Himmelskörper oder stattdessen z. B. einer hyperbolischen Bahn, folgen, sind vorstellbar.

Der Flugkörper 1 kann, beispielsweise als Satellit, aber auch als Raumstation oder Sonde, oftmals über Jahre oder Jahrzehnte im Weltraum verbleiben. Der Begriff "Deorbiting" umfasst den gewollten Absturz des Flugkörpers 1 aus einer Umlaufbahn auf einen Himmelskörper, insbesondere den gewollten Atmosphäreneintritt eines Flugkörpers 1 aus einer erdnahen Umlaufbahn (LEO) in die Erdatmosphäre für die gezielte Zerstörung des Flugkörpers 1.

Beim Deorbiting aus einer erdnahen Umlaufbahn soll der Flugkörper 1 bei dem Atmosphäreneintritt möglichst vollständig verglühen. Beim Eintritt des Flugkörpers 1 aus der erdnahen Umlaufbahn in die Erdatmosphäre wird in kürzester Zeit eine große kinetische Energiemenge in Wärme umgewandelt. Sich im Weltraum bewegende Flugkörper, die nicht mit einem Hitzeschild ausgerüstet sind, werden daher beim Atmosphäreneintritt zerstört.

Angestrebt wird beim Deorbiting ein möglichst weitgehendes Verglühen des Flugkörpers 1. Falls der Flugkörper 1 hierfür zu groß ist bzw. zu viel Masse besitzt, sollen verbleibende Bruchstücke möglichst in unbesiedeltem Gebiet niedergehen. Der Verbleib eines außer Funktion befindlichen Flugkörpers 1, der etwa seine geplante Lebensdauer überschritten hat, in der Umlaufbahn ist in der Regel nicht erwünscht, da dessen Position auf der Bahn für einen neuen, nutzbringenden Flugkörper verwendet werden könnte. Zudem birgt der Verbleib funktionsloser, unkontrollierbarer Flugkörper im Orbit die Möglichkeit von Kollisionen miteinander oder mit weiteren Weltraumschrottobjekten, mit der entsprechenden Entstehung vieler kleinerer Fragmente, deren Beseitigung große Schwierigkeiten aufwirft.

Folglich soll auch bei dem Vorgang des Deorbitierens die Entstehung weiterer Partikel, Stücke oder Fragmente, insbesondere jeweils mit einer Größe von mehr als 1 mm und/oder einem Volumen von mehr als 1 mm³, möglichst unterbleiben.

Um den Atmosphäreneintritt einzuleiten, wird der Flugkörper 1 stark abgebremt, d.h. eine Geschwindigkeitsänderung auf diesen aufgebracht. Bei dem Flugkörper 1 gemäß dem Ausführungsbeispiel in Fig. 1 wird hierzu zu einem festgelegten Zeitpunkt ein Feststoffraketenmotor 2 gezündet.

Die Möglichkeit, relativ kurzzeitig einen hohen Schub mittels des Motors 2 erzeugen zu können, schafft die Möglichkeit eines Atmosphäreneintritts des Flugkörpers 1 in einem steilen Flugwinkel, wodurch es gelingt, den Flugkörper 1 bzw. dessen Bruchstücke in einem vorbestimmten Aufprallbereich auf der Erde, der vorzugsweise ein nicht oder nur dünn besiedeltes Gebiet der Erde ist, zum Absturz zu bringen.

Der Feststoffraketenmotor 2 kann die einzige Einrichtung zur Abbremsung des Flugkörpers 1 für dessen Deorbiting sein. Alternativ kann zusätzlich zum Beispiel ein elektrischer Antrieb vorgesehen sein, der vorab eine allmähliche Abbremsung und Absenkung der Bahn vor dem eigentlichen harten Bremsmanöver vornimmt.

Der Feststoffraketenmotor 2 ist Teil des Flugkörpers 1, wurde gemeinsam mit diesem bereits zu Missionsbeginn des Flugkörpers 1 in den Weltraum verbracht, und somit über die gesamte Einsatzdauer des Flugkörpers 1 im Weltraum gelagert. Alternativ jedoch könnte der Feststoffraketenmotor 2 vorab im Weltraum aufbewahrt werden und zur Verwendung mit Hilfe eines "space tug" am Flugkörper 1 fixiert werden.

Zum Deorbiting erzeugt der Feststoffraketenmotor 2 beim Abbrand des Treibstoffs Reaktionsgase, die mit Hilfe einer Düse 21 in an sich bekannter Weise expandiert, beschleunigt und ausgestoßen werden. Die Düse 21 ist Bestandteil des Feststoffraketenmotors 2 oder mit diesem dicht verbunden. Ein beispielhafter, schematischer Schnitt durch einen Motor 2 nebst Düse 21 ist in Fig. 2 dargestellt.

Vorzugsweise ist der Motor 2 derart am Flugkörper 1 angeordnet oder in diesen integriert, dass ein durch den Motor 2 erzeugter Schubvektor 4, mithin der Vektor der auf den Flugkörper 1 aufgrund des Ausstoßes der durch den Treibstoffabbrand erzeugten, vornehmlich gasförmigen Reaktionsprodukte in Ausstoßrichtung 3 wirkenden Kraft, möglichst präzise durch den Massenschwerpunkt 5 des Flugkörpers 1 verläuft. Dies ermöglicht eine wirkungsvolle Abbremsung des Flugkörpers 1, ohne diesen unerwünscht in Rotation um den Schwerpunkt 5 zu versetzen. Bezugszeichen 9 bezeichnet beispielhaft eine lokale Tangente im Schwerpunkt 5 an die Flugbahn des Flugkörpers 1. Wenngleich in Fig. 1 der Schubvektor 4 beispielhaft entlang der Bahntangente 9 ausgerichtet ist, ist stattdessen eine andere Orientierung des Schubvektors 4 möglich.

Der Motor 2 weist eine Brennkammer 22 mit einem die Brennkammer 22 außenseitig begrenzenden Motorgehäuse 23, einem in der Brennkammer 22 angeordneten festen Treibstoff 24, einen Brennkammeraustritt mit einem beispielweise stufenartigen oder kontinuierlich konvergenten Düsenzulauf 25 und einem Düsenhals, sowie einen mit dem Gehäuse 23 dicht verbundenen divergenten Düsenteil 26 zum Expandieren der Reaktionsprodukte auf. Der Düsenzulauf 25 kann, beispielsweise zur Vereinfachung der Bauweise, sich stufenartig verengen wie in Fig. 2 gezeigt, oder stattdessen eine glatte, sich kontinuierlich verengende Kontur aufweisen. Bei der beispielhaften Gestaltung in Fig. 2 ist der Düsenzulauf 25 als ein Abschnitt des Motorgehäuses 23 ausgebildet, während der divergente Düsenteil 26 als ein separates Bauteil ausgebildet ist. Ein konvergenter Düsenzulauf kann stattdessen jedoch zusammen mit dem divergenten Düsenteil 26 gemeinsam die Düse 21 als ein durchgehendes, zusammenhängendes Bauteil bilden.

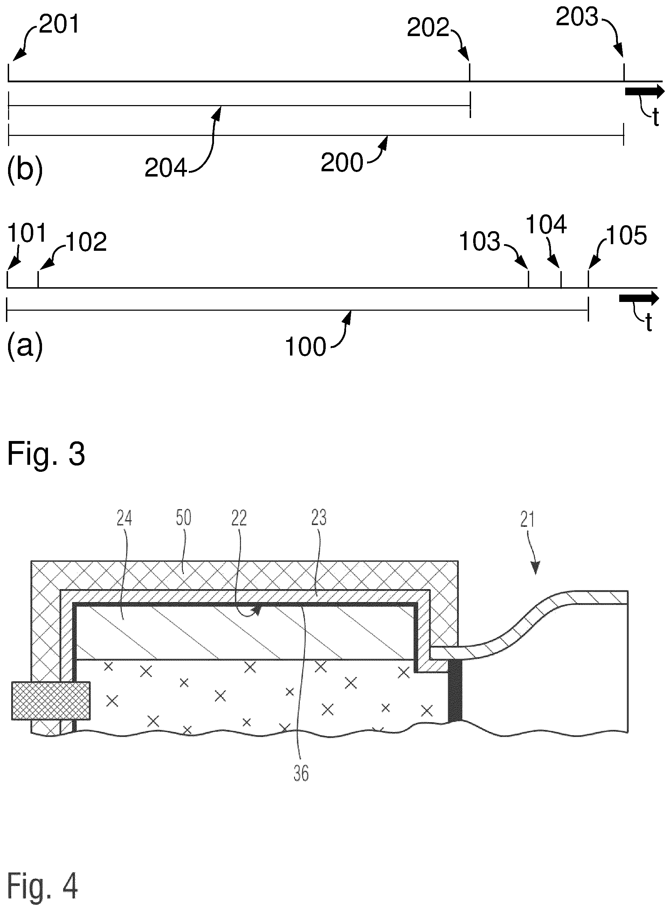

Eine Masse des festen Treibstoffs 24 kann bei dem Motor 2 der Fig. 2 sowie einer in Fig. 4 gezeigten Variante desselben beispielhaft und bevorzugt jeweils in einem Bereich von etwa 0,5 Kilogramm bis etwa 1000 Kilogramm liegen. Andere, kleinere oder größere Treibstoffmassen sind jedoch ebenfalls vorstellbar.

Fig. 3 illustriert schematisch im Teilbild (a) einen vordefinierten Einsatzzeitraum 100 des Flugkörpers 1, z. B. des Satelliten. Dieser kann der Zeitraum vom Start des Flugkörpers 1 mittels eines Trägersystems zum Zeitpunkt 101 bis zum Einleiten des Deorbiting zum Zeitpunkt 105 sein. 102 bezeichnet den Zeitpunkt, zu dem der Flugkörper 1 auf seiner Soll-Umlaufbahn angekommen ist, 103 das Ende des regulären Betriebs und 104 beispielhaft die Festlegung des präzisen Zeitpunkts 105, zu dem der Motor 2 gezündet werden soll.

In alternativer Weise zeigt Fig. 3 im Teilbild (b) beispielhaft eine gesamte Missionsdauer 200 zum Beispiel eines als Sonde ausgebildeten Flugkörpers 1 auf einem interplanetaren Flug, sowie einen erheblichen Teil 204 der Missionsdauer 200. Zum Zeitpunkt 201 erfolgt der Start des Flugkörpers 1, zum Zeitpunkt 202 das Zünden des Motors 2 zum Zweck einer Geschwindigkeitsänderung nach Betrag und/oder Richtung, die unterschiedlichen Zwecken dienen kann und nicht auf ein Abbremsen beschränkt ist. Der Zeitpunkt 203 markiert das Ende der Mission.

Erwähnt sei, dass der tatsächliche Zeitraum 100 oder 204 kürzer sein kann als der vorliegend für die Gestaltung und Qualifikation des Motors 2 und Flugkörpers 1 angenommene, vordefinierte Zeitraum 100 bzw. 204, so dass die Einsatzfähigkeit des Motors 2 bei der eigentlichen Mission gewährleistet ist.

Die Darstellung in Fig. 3 ist jedoch nicht abschließend zu verstehen und dient rein der schematischen Illustration.

Beispielsweise kann der Einsatzzeitraum 100 in Teilbild (a) mindestens fünf Erdjahre, mindestens zehn Erdjahre, mindestens fünfzehn Erdjahre oder mindestens zwanzig Erdjahre betragen. Ferner kann der erhebliche Teil 204 der Missionsdauer 200 mindestens fünf Erdjahre, mindestens zehn Erdjahre, mindestens fünfzehn Erdjahre oder mindestens zwanzig Erdjahre betragen. Andere, insbesondere längere Zeiträume 100 und 204 sind vorstellbar, je nach Ziel und Zweck der Mission des Flugkörpers 1.

Der Motor 2 ist mit Hilfe der nachfolgend beschriebenen Maßnahmen derart ausgebildet und eingerichtet, dass der Motor 2 unter für die Mission des Flugkörpers 1 vordefinierten Weltraumbedingungen mindestens bis zum Ende des vordefinierten Einsatzzeitraums 100 oder mindestens während des vordefinierten, erheblichen Teils 204 der Missionsdauer 200 einsatzfähig bleibt, problemlos gezündet werden kann und wie vorgesehen Schub erbringt.

Fig. 2 zeigt, dass das Gehäuse 23 Komponenten aufweist, die miteinander und mit dem divergenten Abschnitt 26 der Düse 21 an Verbindungsstellen, etwa einer Verbindungsstelle 27 zwischen dem Motorgehäuse 23 und dem divergenten Düsenteil 26, dicht verbunden sind. Die Dichtigkeit ist hierbei bei einem erwarteten äußeren Umgebungsdruck, der unter den erwarteten Bedingungen der angestrebten Flugbahn nahe einem Vakuum liegt oder einem Vakuum entspricht, und einem höheren Druck einer Gasfüllung 29 im Innenraum 28 des Motors 2, gegeben.

Hierbei wird vor Missionsbeginn der Innenraum 28 des Motors 2, der auch den festen Treibstoff 24 enthält, mit einer Gasfüllung 29 gefüllt, wobei insbesondere Stickstoff oder ein Edelgas wie Helium zu Einsatz kommen kann. Diese Gasfüllung 29, deren Anfangsdruck zu Missionsbeginn - rein beispielhaft - zum Beispiel im Bereich von 0,5 bar bis 3,0 bar liegen kann, soll während des Einsatzzeitraums 100 bzw. des erheblichen Teils 204 der Missionsdauer möglichst weitgehend erhalten bleiben, zumindest jedoch soweit, dass zum vorgesehenen Zeitpunkt des Zündens des Motors 2, also zum Zeitpunkt 105 bzw. 202, die inerte Gasfüllung 29 noch einen Gasdruck aufweist, der größer als ein Gasdruck-Mindestwert oder gleich diesem ist. Bei Vorliegen noch mindestens des Gasdruck-Mindestwerts zum vorgesehenen Zündzeitpunkt kann der Motor 2 zuverlässig gezündet werden und weist zudem ein vordefiniertes Soll-Abbrandverhalten auf. Mit anderen Worten ist ein problemloses Zünden und problemloser Abbrand bei Vorliegen des Gasdruck-Mindestwerts zum Zündzeitpunkt möglich. Zum Beispiel kann der Motor 2 derart ausgebildet sein, dass der Gasdruck der inerten Gasfüllung 29 in dessen Innenraum 28 zum Zeitpunkt des Zündens des Motors 2, also zum Zeitpunkt 105 bzw. 202, noch mindestens 100 mbar beträgt, d.h. der genannte Gasdruck-Mindestwert beträgt bei einem vorteilhaften Beispiel 100 mbar. Abhängig insbesondere von dem Treibstoff 24 ist es jedoch vorstellbar, den Gasdruck-Mindestwert abweichend von 100 mbar zu definieren. Sowohl der Anfangsdruck der Gasfüllung 29 als auch der Gasdruck-Mindestwert verstehen sich hierbei, insbesondere mit Blick auf die vorgenannten Zahlenwerte, jeweils unter den operativen, insbesondere gleichen Bedingungen des Flugkörpers 1 im Weltraum, etwa im Orbit, insbesondere bei der dort gegebenen Temperatur, und ferner als Absolutdrücke, mithin gegenüber dem Vakuum.

An den Verbindungsstellen, etwa der Verbindungsstelle 27, können vorzugsweise Schweißverbindungen vorgesehen sein. Diese können vorteilhaft zu einer guten Dichtigkeit beitragen. Das Motorgehäuse 23 kann beispielsweise bis auf die Verbindung mit dem divergenten Düsenteil 26 an der Verbindungsstelle 27, siehe Fig. 2, einstückig ausgebildet sein.

Zusammen mit dieser/diesen dichten Verbindungsstelle(n) wird die Gasfüllung 29 durch eine möglichst gasdichte, folienartige oder membranartige Versiegelung 30, die im Bereich der Düse 21, eines Düsenzulaufs 25 oder Austrittsendes der Brennkammer 22 angeordnet ist, dicht eingeschlossen. Bei der beispielhaften Ausführungsform in Fig. 2 ist die Versiegelung 30 im Bereich des Engstquerschnitts oder Düsenhalses, der Verbindungsstelle 27 benachbart, angeordnet. Die alternative Verwendung von Dichtringen wie O-Ringen an den Verbindungsstellen, zum Beispiel an der Stelle 27, oder einer/einiger dieser ist grundsätzlich denkbar, Schweißverbindungen sind jedoch bevorzugt.

Auf diese Weise wird sichergestellt, dass der Feststoffraketenmotor 2 über einen Zeitraum von beispielsweise 5, 10, 15 oder 20 Jahren oder einen noch längeren Zeitraum im Weltraum unter dem gegebenen Weltraum-Umgebungsdruck, insbesondere Vakuum oder nahe Vakuum, keinen Schaden nimmt bzw. dessen Funktion nicht inakzeptabel beeinträchtigt wird. Der Motor 2 und dessen Komponenten sind somit derart ausgebildet und verbunden, dass während eines jahrelangen oder jahrzehntelangen Aufenthalts im Weltraum eine hinreichende Vakuumdichtigkeit gegeben ist, so dass eine nachteilige Veränderung des Treibstoffs 24 bei der Lagerung unter Weltraumbedingungen, etwa durch Ausgasen unter Vakuum, vermieden wird.

Innerhalb der Brennkammer 22 sind ein mit dem festen Treibstoff 24 gebildeter Treibsatz sowie eine Anzündeinrichtung 40 für diesen, oder zumindest ein Teil der Anzündeinrichtung 40, vorgesehen. Die bei Abbrand des Treibsatzes entstehenden Reaktionsprodukte und deren Beschleunigung in der Düse bewirken die Schubkraft 4. Der feste Treibstoff 24 ist vorzugsweise hinsichtlich der geometrischen Formgebung desselben, insbesondere der initialen Abbrandoberfläche, derart ausgebildet, dass eine gewünschte Abbrandcharakteristik, insbesondere ein gewünschter zeitlicher Verlauf des Abbrands und Schubs, eingestellt wird. Unterschiedliche Formgebungen sind in dieser Hinsicht vorstellbar. Insbesondere kann der Treibsatz eine zentrale Ausnehmung 34 um eine Längsachse 32 desselben herum aufweisen, deren Querschnitt und/oder Längsschnitt in unterschiedlicher Weise gestaltet sein kann/können.

Der feste Treibstoff 24 kann zum Beispiel Ammoniumperchlorat beinhalten. Beispielsweise kann es sich um den Treibstoff RESI-172 der Bayern Chemie handeln, wobei es sich um ein Beispiel eines HTPB-AP-Treibstoffs handelt. Hierbei steht die Abkürzung HTPB für hydroxylterminiertes Polybutadien und AP für Ammoniumperchlorat.

Bei anderen Ausführungsbeispielen kann der feste Treibstoff 24 des Motors 2 einen GAP-Festttreibstoff aufweisen, wobei die Abkürzung GAP für Glycidyl-Azid-Polymer steht.

Somit ist der fertiggestellte Treibsatz des Motors 2 auch im Hinblick auf die Frage der Toxizität gut zu handhaben. Flüssiges, giftiges Hydrazin beispielsweise kommt nicht zum Einsatz. Es können zur Herstellung des Treibsatzes ferner sogenannte "grüne" Treibstoffe eingesetzt werden.

Der im Motor 2 verwendete feste Treibstoff 24 kann Spuren von Metallen enthalten, vorzugsweise sind die Metallanteile jedoch relativ gering. Vorzugsweise kann der Festtreibstoff 24 geeignet sein, einen spezifischen Impuls in der Größenordnung von zum Beispiel ca. 2500 m/s zu erzielen.

Der mit dem Treibstoff 24 gebildete Treibsatz des Feststoffraketenmotors 2 sowie die zugehörige Anzündeinrichtung 40 können nach der sogenannten militärischen MIL-Norm qualifiziert sein.

Beim Zünden des Motors 2 und Abbrand des festen Treibstoffs 24 wird die Versiegelung 30, die ein Entweichen der schützenden Inertgasfüllung 29 während der Lagerdauer verhindert oder mindestens hinreichend verlangsamt, zerstört. Hierbei sind der Motor 2 und insbesondere die Versiegelung 30 derart ausgebildet, dass durch das Aufplatzen und die Zerstörung der Versiegelung 30 im Wesentlichen keine Fragmente oder keine Fragmente mit jeweils einer Größe von mehr als 1 mm und/oder einem Volumen von mehr als 1 mm³, generiert und freigesetzt werden. Somit wird die Entstehung von Partikeln, die andere Flugkörper schädigen könnten, möglichst vermieden.

Die Treibstoffzusammensetzung ist derart gewählt, dass der bestimmungsgemäße, kontrollierte Abbrand des Treibstoffs 24 im Wesentlichen keine Partikel oder keine Partikel jeweils mit einer Größe von mehr als 1 mm und/oder einem Volumen von mehr als 1 mm³ generiert und freisetzt. Insbesondere wird zum Beispiel eine Agglomeration von Reaktionsprodukten, die zu Partikeln oberhalb dieser Maximalwerte führen würde, während des Abbrands vermieden. Der feste Treibstoff 24 brennt somit im Wesentlichen partikelfrei ab.

Beim Betrieb des Motors 2 kann im Bereich der Düse 21 und/oder des Düsenhalses und/oder des den Zulauf 25 zur Düse 21 bildenden Brennkammerabschnitts Material abgetragen werden, zudem kommt es zu Abbrand und/oder Abtrag einer Isolationsschicht 36 zwischen dem festen Treibstoff 24 und der Brennkammerwand als Innenwand des Gehäuses 23, sofern eine solche Isolationsschicht 36 vorhanden ist. Fig. 4 zeigt schematisch eine Variante mit einer derartigen Isolationsschicht 36. Bei dem Motor 2 gemäß dem Ausführungsbeispiel werden hierbei im Wesentlichen keine Partikel oder Fragmente oder zumindest keine Partikel oder Fragmente mit jeweils einer Größe von mehr als 1 mm und/oder einem Volumen von mehr als 1 mm³, freigesetzt.

Insbesondere wird bei dem Motor 2 somit die Erzeugung solcher Partikel aufgrund von Agglomeration während des Abbrands, Materialabtrag in der Düse 21 und insbesondere im Bereich des Düsenhalses, Materialabtrag im Bereich des Zulaufs 25 zur Düse 21, sowie ausgehend von der Einwirkung des abbrennenden Treibstoffs auf die Isolationsschicht 36 zwischen Treibstoff 24 und Brennkammerinnenwand und deren Abtrag/Abbrand vermieden.

Ferner ist zudem die Anzündeinrichtung 40 für den festen Treibstoff 24 derart ausgebildet, dass durch Auslösen und Betrieb der Anzündeinrichtung 40 im Wesentlichen keine Partikel oder Fragmente oder keine Partikel oder Fragmente mit jeweils einer Größe von mehr als 1 mm und/oder einem Volumen von mehr als 1 mm³, freigesetzt werden.

Insgesamt ist der Feststoffraketenmotor 2 somit derart ausgebildet, dass durch den Betrieb desselben im Wesentlichen keine Partikel, Stücke oder Fragmente oder zumindest keine Partikel, Stücke oder Fragmente, deren Größe jeweils einen vorbestimmten Maximalwert von insbesondere 1 mm und/oder deren Volumen jeweils einen vorbestimmten Maximalwert von insbesondere 1 mm³ übersteigt, generiert und/oder freigesetzt werden.

Während sich der Flugkörper 1 im Weltraum auf seiner vordefinierten Flugbahn bzw. Umlaufbahn (Orbit) im Raum und/oder um einen Himmelskörper wie insbesondere die Erde befindet, ist der Flugkörper 1 äußeren Einflüssen ausgesetzt. Zusätzlich zu Bedingungen, die einem Vakuum entsprechen oder diesem nahe kommen, wirken auf den Flugkörper 1 insbesondere zudem Sonnenstrahlung 6, Mikrometeoriten 7 und Weltraumstrahlung 8 ein, siehe die schematische Darstellung in Fig. 1. Die Weltraumstrahlung 8 umfasst hochenergetische Teilchenstrahlung und kann auch hochenergetische elektromagnetische Strahlung beinhalten, abhängig von der Bahn des Flugkörpers 1. Die Teilchenstrahlung umfasst beispielsweise mit hoher Geschwindigkeit eintreffende Protonen, Elektronen, Alphateilchen und andere, schwerere Atomkerne.

Die Sonnenstrahlung 6 erwärmt hierbei eine sonnenzugewandte Seite des Flugkörpers 1, während eine dem Weltraum zugewandte Seite des Flugkörpers 1, die im Schatten liegt, stark auskühlt. Der Flugkörper 1 kann nicht näher gezeigte Einrichtungen aufweisen, die ein Wärmemanagement ermöglichen. Im Weltraum unterliegen der Flugkörper 1 und auch der Motor 2 gleichwohl im Allgemeinen vielfach hohen Temperaturgradienten und - beispielsweise durch eine Rotation des Flugkörpers 1 um eine Achse durch dessen Schwerpunkt 5 - einer zyklischen Temperaturänderung, insbesondere aufgrund der Sonneneinstrahlung auf eine Seite des Flugkörpers 1 und Abstrahlung auf einer gegenüberliegenden Seite.

Somit werden der Motor 2 und der feste Treibstoff 24 zyklisch und ggf. bereichsweise einer durch die Temperaturänderung bedingten Ausdehnung und Zusammenziehung ausgesetzt, womit Spannungen im Material, insbesondere im festen Treibstoff 24, einhergehen können. Der Motor 2 und insbesondere der feste Treibstoff 24 sind derart ausgebildet und im Flugkörper 1 angeordnet, dass kein mechanisches Versagen des Motors 2 und insbesondere hierbei kein mechanisches Versagen des Festtreibstoffs 24 während des Einsatzzeitraums 100 bzw. des erheblichen Teils 204 der Missionsdauer, bei der hierfür erwarteten Anzahl und Ausprägung der Temperaturschwankungen, eintritt.

Der Motor 2 ist zudem derart ausgebildet und/oder in dem Flugkörper 1 untergebracht, dass während des Einsatzzeitraums 100 und/oder des Teils 204 der Missionsdauer 200 unter den vordefinierten Weltraumbedingungen auf den festen Treibstoff 24 einwirkende Weltraumstrahlung 8 eine Fähigkeit des Treibstoffs 24 für einen bestimmungsgemäßen Abbrand im Betrieb und eine Widerstandsfähigkeit des Treibstoffs 24 gegen unkontrollierte Reaktion desselben nicht wesentlich beeinträchtigt. Insbesondere ist hierbei vorgesehen, dass die unter den vordefinierten Weltraumbedingungen auf den Treibstoff 24 einwirkende Weltraumstrahlung 8 eine Abbrandgeschwindigkeit und/oder einen spezifischen Impuls des Treibstoffs 24 nicht wesentlich beeinträchtigt.

Dies kann dadurch erreicht werden, dass der Treibstoff 24 als solcher zumindest in einem gewissen Ausmaß resistent gegenüber der einfallenden kosmischen Strahlung 8 ist. Alternativ oder zusätzlich kann der Motor 2 derart in dem Flugkörper 1 untergebracht werden, dass zumindest in einem gewissen Maße ein Schutz des Treibstoffs 24 gegenüber der Weltraumstrahlung 8 erreicht wird. Hierbei kann das Gehäuse 23 des Motors 2 eine die Strahlung 8 bei deren Durchtritt wenigstens teilweise abschirmende oder signifikant schwächende oder modifizierende Wirkung haben. Beispielsweise kann eine Brennkammerkomponente als Teil des Gehäuses 23 eine derartige abschirmende oder die Strahlung 8 schwächende oder modifizierende Wirkung haben. Alternativ oder zusätzlich kann der Motor 2 von einem abschirmenden Element 50 oder einem Schild umgeben sein, das bzw. der eine derartige abschirmende oder schwächende oder modifizierende Wirkung hat. Fig. 2 zeigt beispielhaft ein derartiges abschirmendes, schildartiges Element 50, das das Motorgehäuse 24, bis auf einen Durchtrittsbereich der Düse 21 und ggf. der Anzündeinrichtung 40, im Wesentlichen vollständig sowohl umfangsseitig als auch stirnseitig umgibt.

Eine strahlungsmindernde Wirkung des Gehäuses 23 kann zum Beispiel einfacher erreicht werden, indem das Gehäuse 23 mit einem Metall ausgebildet wird. Alternativ ist die Ausbildung des Gehäuses 23 mit einem faserverstärkten Kunststoff möglich, wobei vorzugsweise dann der Schild 50 zusätzlich vorgesehen ist, um die beschriebene Strahlungsverminderung zu ermöglichen und den Treibstoff 50 zu schützen. Gleichwohl ist auch eine Kombination eines mit einem Metall gebildeten Gehäuses 23 mit dem abschirmenden Element 50 möglich.

Ferner ist der Motor 2 mit dem festen Treibstoff 24 und ggf. dem optionalen Schild 50 derart ausgebildet, dass, aufgrund der strahlungsresistenten Ausbildung des festen Treibstoffs 24 oder durch die abschirmende, abschwächende oder modifizierende Wirkung des Gehäuses 23 und/oder Schilds 50, oder durch beide in Kombination, der feste Treibstoff 24 durch die Einwirkung der Weltraumstrahlung 8 im Zeitraum 100 bzw. 204 hinsichtlich der mechanischen Eigenschaften, etwa Elastizität, des Treibstoffs 24 nur vernachlässigbar beeinträchtigt wird. Insbesondere ist sichergestellt, dass es zu einer Versprödung des festen, im Zustand bei Missionsbeginn des Flugkörpers 1 elastischen Treibstoffs 24 nicht oder nur in einem Ausmaß kommt, das die Fähigkeit des festen Treibstoffs 24, wiederholte thermische Ausdehnung und Zusammenziehung ohne mechanischen Schaden zu überstehen, während des vordefinierten Einsatzzeitraums 100 und/oder des erheblichen Teils 204 der Missionsdauer 200 nicht oder nur unwesentlich beeinträchtigt.

Die Einwirkung der Weltraumstrahlung 8 kann zwar auch bei dem Motor 2 den festen Treibstoff 24 ggf. verändern, jedoch ist der Motor 2 hierbei derart ausgebildet, dass die strahlungsbedingte Veränderung so weitgehend begrenzt bleibt, dass hieraus keine Probleme resultieren, insbesondere Abbrandgeschwindigkeit, spezifischer Impuls und Elastizität allenfalls unerheblich beeinflusst werden.

Der Feststoffraketenmotor 2 hält somit die im All auftretende zyklische Thermalbelastung aus, auch in Kombination mit der Einwirkung der Weltraumstrahlung 8, ohne dass die Weltraumstrahlung 8 den Treibstoff 24 soweit verändern und/oder verspröden lassen würde, dass es vor dem geplanten Einsatzzeitpunkt des Motors 2 zum mechanischen Versagen des Treibstoffs 24 durch Reißen kommen würde.

Der Motor 2 ist somit in dieser Weise derart ausgebildet, dass er dem Einfluss jahrelanger kosmischer Strahlung im Weltraum widersteht, keine oder nur eine tolerierbare strahlungsbedingte Materialermüdung und/oder Schädigung erfährt, und zum gewünschten Zeitpunkt einsatzfähig ist.

Wird das Gehäuse 23, die Brennkammerkomponente 50 und/oder der Schild 50 mit abschirmender oder die Strahlung 8 schwächender Wirkung vorgesehen, so kann hierbei vorgesehen sein, dass das Gehäuse 23 oder die Brennkammerkomponente oder der Schild 50 mit einem Werkstoff mit einem hohen Absorptionsvermögen für eine, einige oder alle Komponente(n) der Weltraumstrahlung 8 gebildet ist. Alternativ wäre es denkbar, das Gehäuse 23, die Brennkammerkomponente und/oder den Schild 50 mit einem hohen Reflektionsvermögen für die Weltraumstrahlung oder eine, einige oder alle der Komponente(n) dieser auszustatten. Kombinationen einer Gehäuse- oder Brennkammerkomponente und eines Schildes mit jeweils unterschiedlichem Wirkmechanismus sind denkbar.

Bei dem in Fig. 2 skizzierten Beispiel ist der Motor 2, wie oben beschrieben, im Wesentlichen vollständig mit dem als Abschirmung oder Schild wirkenden, die Weltraumstrahlung absorbierenden und/oder reflektierenden Element 50 umgeben. Jedoch kann der Motor 2 stattdessen auch lediglich abschnittsweise mit dem Element 50 umgeben sein.

Bei dem Motor 2 ist ferner der feste Treibstoff 24 unempfindlich gegen den Einschlag der Mikrometeoriten 7 ausgebildet und/oder gegen den Einschlag der Mikrometeoriten 7 geschützt untergebracht. Das/die als Gehäuse 23, Brennkammerkomponente und/oder Schild 50 ausgebildete(n) abschirmende(n) Element(e), ermöglicht/ermöglichen vorzugsweise zudem, eine Einwirkung von Mikrometeoriten auf den festen Treibstoff 24 wenigstens zu vermindern, beispielsweise in dem das Auftreffen des Mikrometeoriten 7 auf den Treibstoff 24 selbst verhindert oder zumindest die Auftreffgeschwindigkeit des Mikrometeoriten 7 hinreichend vermindert wird.

Zu den Mikrometeoriten 7 können auch mikrometeoritenähnliche Teilchen gerechnet werden, die menschengemachten Ursprungs sind, z. B. auf die menschliche Raumfahrtaktivität zurückgehen, und ebenfalls mit hoher Geschwindigkeit in Bewegung sind.

Bei der Gestaltung des festen Treibstoffs 24 sowie des abschirmenden Elements 50 kann ein Einschlag eines Mikrometeoriten 7 und/oder mikrometeoritenähnlichen Teilchens mit vordefinierter Masse und Geschwindigkeit zu Grunde gelegt werden, wobei sichergestellt wird, dass die Begegnung desselben mit dem Flugkörper 1, der den Motor 2 trägt, weder Abbrand noch Detonation oder anderweitige Zersetzung des Treibstoffs 24 auslöst. Somit ist bei dem Flugkörper 1 mit dem Motor 2 sichergestellt, dass der Einschlag des Mikrometeoriten 7 keine Fehlfunktion des Feststoffraketenmotors 2 auslöst, der Motor 2 ist unempfindlich gegen einen derartigen Einschlag.

Ein Schild zum Schutz gegen die Mikrometeoriten 7 könnte beispielsweise zusätzlich zu einer mit einem Metall gebildeten, strahlungsabschirmenden Brennkammerkomponente als Teil des Gehäuses 23 vorgesehen sein. Hierbei kann der Schild insbesondere als ein Wabenkörper mit einem Laminat ausgebildet sein. Ein mehrschichtig, beispielsweise mit mehreren Schichten unterschiedlicher Werkstoffe, aufgebauter Schild und/oder eine mehrschichtig, etwa mit unterschiedlichen Werkstoffen, aufgebaute abschirmende Gehäuse- oder Brennkammerkomponente sind denkbar. Beispielsweise kann das in Fig. 2 gezeigte Element 50, etwa in Form eines derartigen Laminats oder Wabenkörpers, zum Schutz gegen Mikrometeoriten 7 ein metallisches Motorgehäuse 23 umgeben.

Die vorgenannten Maßnahmen zum Schutz des Flugkörpers 1 gegenüber den äußeren Einflüssen, insbesondere wechselnde Temperaturen durch Sonneneinstrahlung 6, Mikrometeoriten 7 sowie ggf. bereits vorhandenen Weltraummüll in Form kleinerer Partikel, und kosmische Strahlung 8, können je nach der gewählten Bahn des Flugkörpers 1 im Weltraum sowie in Abhängigkeit der erwarteten Strahlung und der erwarteten Größen, Geschwindigkeiten und Häufigkeit des Auftretens des Weltraummülls und/oder der Mikrometeoriten in der jeweiligen Umlaufbahn angepasst werden.

Vorzugsweise ist der Motor 2 derart präzise in dem Flugkörper 1 angeordnet und das Gesamtsystem des Flugkörpers 1 so genau ausgelegt, dass zum Einsatzzeitpunkt des Motors 2 der Schubvektor 4 möglichst genau durch den Schwerpunkt 5 verläuft, die Schubvektorabweichung also sehr gering ist. Hierbei ist auch der Motor 2, insbesondere hinsichtlich der Geometrie von Düse und Treibsatz, für eine geringe Schubvektorabweichung ausgebildet. Zudem kann die Auslegung des Flugkörpers 1 sicherstellen, dass die Auswirkungen einer begrenzten Schubvektorabweichung in einem akzeptablen Rahmen liegen und/oder beherrschbar sind.

Zusätzlich oder alternativ könnte hierzu bei einigen Varianten der vorstehend erläuterten Ausführungsbeispiele eine Schubvektorsteuerung vorgesehen sein. Eine derartige Schubvektorsteuerung ermöglicht ein gezieltes Ausrichten des Abgasstrahls des Feststoffraketenmotors 2 relativ zu dem Flugkörper 1, etwa durch Schwenken des Schubvektors 4 um wenigstens zwei voneinander abweichende Richtungen, und somit eine genaue Einstellung des Schubvektors 4.

Bei einigen Varianten kann der Feststoffraketenmotor 2 ferner dafür ausgebildet sein, mehrere vordefinierte Schubimpulse zu erzeugen.

Bei einer weiteren Variante könnte der Flugkörper 1 als eine Trägerrakete oder ein Teil einer solchen ausgebildet sein. Zum Beispiel könnte der Motor 2 mit Hilfe eines "space tug" an einer ausgebrannten, auf einer Umlaufbahn befindlichen Stufe angebracht werden.

Die Erfindung ermöglicht vorteilhaft somit ein Aufbringen einer Geschwindigkeitsänderung, insbesondere zum Deorbiten, auf Flugkörper 1 wie Satelliten, jedoch gleichermaßen auf andere Flugkörper wie beispielsweise Raumstationen oder Teile dieser, auf Raumsonden, oder auf Trägersysteme oder Teile dieser nach deren Gebrauch, wobei insbesondere:
- eine einfache, kompakte Bauweise und einfache Handhabung sowie hohe Zuverlässigkeit erreicht werden,
- die Entstehung von Partikeln, die zusätzlich zum Weltraummüll beitragen würden, vermieden wird,
- der vorgeschlagene Motor 2 vor Weltraumstrahlung 8 geschützt ist und/oder diese hinreichend toleriert,
- Auswirkungen eines Einschlags von Mikrometeoriten 7 im Bereich des Motors 2 reduziert werden,
- eine Dichtigkeit des Motors 2 gegenüber dem Vakuum oder geringem Umgebungsdruck im Weltraum während dessen Lagerdauer im Weltraum gegeben ist,
- der Motor 2 vor zyklischer Thermalbelastung geschützt ist und/oder diese in hinreichender Weise toleriert.

Wie vorstehend beschrieben ist, kann der Motor 2 somit jahre- oder jahrzehntelang, zum Beispiel über einen Zeitraum von mindestens 20 Jahren, im Weltraum verbleiben, verursacht hierbei keine Probleme während der Lagerdauer und kann am Ende dieser Lagerdauer zuverlässig eingesetzt werden. Bei dem Motor 2 ist sichergestellt, dass die Weltraumbedingungen über diesen Zeitraum keine inakzeptablen Auswirkungen auf die Funktionsfähigkeit des Motors 2 und insbesondere des Treibstoffs 24 haben.

Bevorzugt wird ein baugleiches Exemplar des Motors 2 vor dem tatsächlichen Einsatz in dem Flugkörper 1 im Weltraum auf die vorgenannten Anforderungen bezüglich der Auswirkungen kosmischer Strahlung 8, des Auftreffens von Mikrometeoriten 7, der zyklischen Temperaturänderung, des hinreichenden Erhalts der inerten Gasfüllung und des möglichst partikelfreien Betriebs am Boden hin getestet und qualifiziert.

Wenngleich die Erfindung vorstehend anhand bevorzugter Ausführungsbeispiele vollständig beschrieben wurde, ist sie nicht darauf beschränkt, sondern auf vielfältige Art und Weise modifizierbar.

### BEZUGSZEICHENLISTE

- 1: Flugkörper
- 2: Motor
- 3: Ausstoßrichtung von Reaktionsprodukten
- 4: Richtung der Schubkraft
- 5: Massenschwerpunkt (Flugkörper)
- 6: Thermalbelastung durch Sonneneinstrahlung
- 7: Mikrometeoriten
- 8: kosmische Strahlung
- 9: Bahntangente
- 10: Photovoltaikeinrichtung
- 21: Düse
- 22: Brennkammer
- 23: Motorgehäuse
- 24: fester Treibstoff
- 25: Düsenzulauf
- 26: divergenter Düsenteil
- 27: Verbindungsstelle
- 28: Innenraum
- 29: Gasfüllung
- 30: Versiegelung
- 32: Längsachse (Treibsatz)
- 34: zentrale Ausnehmung (Treibsatz)
- 36: Isolationsschicht
- 40: Anzündeinrichtung
- 50: abschirmendes Element
- 100: Einsatzzeitraum
- 101: Startzeitpunkt
- 102: Zeitpunkt der Ankunft auf Soll-Bahn
- 103: Ende des regulären Betriebs
- 104: Festlegung des Zündzeitpunkts für Deorbiting
- 105: Zündzeitpunkt für Deorbiting
- 200: Missionsdauer
- 201: Startzeitpunkt
- 202: Zündzeitpunkt für Geschwindigkeitsänderung
- 203: Missionsende
- 204: erheblicher Teil der Missionsdauer
- t: Zeit

## Patentansprüche

1. Motor (2) zum Aufbringen einer Geschwindigkeitsänderung, nach Betrag und/oder Richtung, auf einen Flugkörper (1) im Weltraum, insbesondere zum Deorbiten des Flugkörpers (1), wobei der Motor (2) als ein Feststoffraketenmotor mit einem festen Treibstoff (24) ausgebildet ist und der Motor (2) derart ausgebildet und eingerichtet ist, dass eine Einsatzfähigkeit des Motors (2) unter für die Mission des Flugkörpers (1) vordefinierten Weltraumbedingungen mindestens bis zum Ende eines vordefinierten Einsatzzeitraums (100) des Flugkörpers (1) oder mindestens während eines vordefinierten, erheblichen Teils (204) einer Missionsdauer (200) des Flugkörpers (1) erhalten bleibt.

2. Motor nach Anspruch 1, wobei der Motor (2) gegenüber einem unter den vordefinierten Weltraumbedingungen erwartbaren Umgebungsdruck in der Weise dicht ausgebildet ist, dass eine vor Missionsbeginn in einen Innenraum (28) des Motors (2), der den festen Treibstoff (24) enthält, eingebrachte Gasfüllung (29), insbesondere eine mit Stickstoff oder einem Edelgas gebildete Gasfüllung (29), während des Einsatzzeitraums (100) oder erheblichen Teils (204) der Missionsdauer (200) des Flugkörpers (1) im Wesentlichen erhalten bleibt und/oder ein Gasdruck der Gasfüllung (29) in dem Innenraum (28) am Ende des Einsatzzeitraums (100) oder des erheblichen Teils (204) der Missionsdauer (200) größer als ein oder gleich einem Gasdruck-Mindestwert ist, der ermöglicht, dass der Motor (2) gezündet werden kann und ein vordefiniertes Soll-Abbrandverhalten aufweist und/oder der Gasdruck in dem Innenraum (28) am Ende des Einsatzzeitraums (100) oder des erheblichen Teils (204) der Missionsdauer (200) unter den vordefinierten Weltraumbedingungen, insbesondere den operativen Bedingungen des Flugkörpers (1) im Weltraum, mindestens 100 mbar beträgt, wobei insbesondere Komponenten eines Gehäuses (23) des Motors (2) miteinander und/oder mit einer Düse (21), mittels der Reaktionsprodukte beim Abbrand des Treibstoffs (24) beschleunigt und expandiert werden, oder mit einem Düsenteil (26), unter dem Umgebungsdruck, der unter den vordefinierten Weltraumbedingungen erwartbar ist, dicht verbunden sind, insbesondere verschweißt sind.

3. Motor nach einem der vorstehenden Ansprüche, wobei der Motor (2) derart ausgebildet ist, dass durch den Betrieb des Motors (2) im Wesentlichen keine Partikel, Stücke oder Fragmente freigesetzt werden, deren Größe und/oder Volumen jeweils einen vorbestimmten Maximalwert übersteigt.

4. Motor nach einem der vorstehenden Ansprüche, wobei eine durch Inbetriebnahme des Motors (2) zerstörbare, insbesondere folien- oder membranartige, Versiegelung (30) des Motors (2) im Bereich einer Düse (21), eines Düsenzulaufs (25) oder eines Austrittsendes einer Brennkammer (22) derart ausgebildet ist, dass durch das Zerstören der Versiegelung (30) bei der Inbetriebnahme des Motors (2) im Wesentlichen keine Fragmente oder keine Fragmente mit einer Größe und/oder einem Volumen oberhalb eines vordefinierten Maximalwerts, insbesondere jeweils einer Größe von mehr als 1 mm und/oder einem Volumen von mehr als 1 mm³, freigesetzt werden.

5. Motor nach einem der vorstehenden Ansprüche, wobei der feste Treibstoff (24) derart ausgebildet ist, dass durch den Abbrand des Treibstoffs (24), insbesondere durch Agglomeration von Treibstoffbestandteilen und/oder Reaktionsprodukten, im Wesentlichen keine Partikel oder keine Partikel mit einer Größe und/oder einem Volumen oberhalb eines vordefinierten Maximalwerts, insbesondere jeweils einer Größe von mehr als 1 mm und/oder einem Volumen von mehr als 1 mm³, freigesetzt werden.

6. Motor nach einem der vorstehenden Ansprüche, wobei der Motor (2) derart ausgebildet ist, dass beim Betrieb des Motors (2) durch Materialabtrag im Bereich einer Düse (21) und/oder eines einen Zulauf zur Düse (21) bildenden Brennkammerabschnitts (25) und/oder durch Abbrand oder Abtrag einer Isolationsschicht (36) zwischen dem festen Treibstoff (24) und einer Brennkammerwand im Wesentlichen keine Partikel oder Fragmente oder keine Partikel oder Fragmente mit einer Größe und/oder einem Volumen oberhalb eines vordefinierten Maximalwerts, insbesondere jeweils einer Größe von mehr als 1 mm und/oder einem Volumen von mehr als 1 mm³, freigesetzt werden.

7. Motor nach einem der vorstehenden Ansprüche, wobei der Motor (2) eine Anzündeinrichtung (40) für den festen Treibstoff (24) aufweist, welche derart ausgebildet ist, dass durch Auslösen und Betrieb der Anzündeinrichtung (40) im Wesentlichen keine Partikel oder Fragmente oder keine Partikel oder Fragmente mit einer Größe und/oder einem Volumen oberhalb eines vordefinierten Maximalwerts, insbesondere jeweils einer Größe von mehr als 1 mm und/oder einem Volumen von mehr als 1 mm³, freigesetzt werden.

8. Motor nach einem der vorstehenden Ansprüche,
wobei der feste Treibstoff (24) derart ausgebildet und in dem Motor (2) untergebracht ist, dass der feste Treibstoff (24) unter einer bei den vordefinierten Weltraumbedingungen erwartbaren zyklischen Temperaturänderung und resultierender Thermalbelastung des Treibstoffs (24) während des vordefinierten Einsatzzeitraums (100) des Flugkörpers (1) oder des erheblichen Teils (204) der Missionsdauer (200) durch wiederholtes Ausdehnen und Zusammenziehen im Wesentlichen nicht mechanisch versagt;
und/oder wobei der feste Treibstoff (24) gegenüber einer unter den vordefinierten Weltraumbedingungen auf den Treibstoff (24) einwirkenden Weltraumstrahlung (8), insbesondere hochenergetischer Teilchen- und/oder elektromagnetischer Strahlung, resistent ausgebildet ist.

9. Motor nach einem der vorstehenden Ansprüche, wobei während des vordefinierten Einsatzzeitraums (100) und/oder des erheblichen Teils (204) der Missionsdauer (200) unter den vordefinierten Weltraumbedingungen auf den Treibstoff (24) einwirkende Weltraumstrahlung (8) eine Fähigkeit des Treibstoffs (24) für einen bestimmungsgemäßen Abbrand im Betrieb und eine Widerstandsfähigkeit des Treibstoffs (24) gegen unkontrollierte Reaktion desselben nicht wesentlich beeinträchtigt und insbesondere dass die unter den vordefinierten Weltraumbedingungen auf den Treibstoff (24) einwirkende Weltraumstrahlung (8) eine Abbrandgeschwindigkeit und/oder einen spezifischen Impuls nicht wesentlich beeinträchtigt.

10. Motor nach einem der vorstehenden Ansprüche, wobei eine Änderung mechanischer Eigenschaften des festen Treibstoffs (24), insbesondere einer Elastizität oder Dehnbarkeit, während des vordefinierten Einsatzzeitraums (100) des Flugkörpers (1) oder des erheblichen Teils (204) der Missionsdauer (200), insbesondere aufgrund einer Einwirkung von unter den vordefinierten Weltraumbedingungen auf den Treibstoff (24) einwirkender Strahlung, in der Weise begrenzt ist, dass während der im vordefinierten Einsatzzeitraum (100) des Flugkörpers (1) oder erheblichen Teil (204) der Missionsdauer (200) erwarteten Thermalzyklen kein mechanisches Versagen des Treibstoffs (24) auftritt.

11. Motor nach einem der vorstehenden Ansprüche, wobei der feste Treibstoff (24) unempfindlich gegen den Einschlag von Mikrometeoriten (7) und/oder mikrometeoritenähnlichen Teilchen (7) ausgebildet und/oder gegen den Einschlag von Mikrometeoriten (7) und/oder mikrometeoritenähnlichen Teilchen (7) geschützt untergebracht ist, wobei der feste Treibstoff (24) insbesondere derart ausgebildet ist, dass ein Einschlag eines Mikrometeoriten (7) und/oder mikrometeoritenähnlichen Teilchens mit vordefinierter Masse und Geschwindigkeit weder Abbrand noch Detonation des Treibstoffs (24) auslöst.

12. Motor nach einem der vorstehenden Ansprüche, wobei der Motor (2) ein abschirmendes Element (23, 50), insbesondere eine Gehäuse- oder Brennkammerkomponente (23) und/oder einen zusätzlichen Schild (50), aufweist, das dafür eingerichtet ist, eine Einwirkung von Weltraumstrahlung (8) und/oder Mikrometeoriten (7) und/oder mikrometeoritenähnlichen Teilchen (7) auf den festen Treibstoff (24) wenigstens zu vermindern.

13. Motor nach einem der vorstehenden Ansprüche, wobei der Motor (2) mit einer Schubvektorsteuerung versehen ist.

14. Flugkörper (1) für den Einsatz im Weltraum, aufweisend einen Motor (2) nach einem der vorstehenden Ansprüche, wobei der Flugkörper (1) insbesondere dafür ausgebildet ist, sich während seines Einsatzzeitraums im Weltraum auf einer Umlaufbahn um ein Gravitationszentrum, insbesondere auf einer Erdumlaufbahn, zu bewegen.

15. Flugkörper nach Anspruch 14,
wobei der Flugkörper (1) für einen Einsatzzeitraum (100) von mindestens fünf Erdjahren oder von mindestens zehn Erdjahren oder von mindestens fünfzehn Erdjahren oder von mindestens zwanzig Erdjahren ausgebildet ist oder für eine Missionsdauer (200) ausgebildet ist, wobei deren erheblicher Teil (204) mindestens fünf Erdjahre oder mindestens zehn Erdjahre oder mindestens fünfzehn Erdjahre oder mindestens zwanzig Erdjahre beträgt; und/oder wobei der Flugkörper (1) als ein Satellit oder als eine Raumstation oder ein Teil einer solchen oder als eine Raumsonde oder als eine Trägerrakete oder ein Teil einer solchen ausgebildet ist.
